# EUROPÄISCHE PATENTSCHRIFT

(11) **EP 1 912 759 B1**
(45) Veröffentlichungstag und Bekanntmachung des Hinweises auf die Patenterteilung: **14.04.2010**
(21) Anmeldenummer: 06762726.5
(22) Anmeldetag: 20.07.2006
(51) Int. Cl.: B23K 26/26, B23K 20/12, B23K 9/025, B23K 1/16, B64C 1/00, B64C 1/06, B23K 101/18

(54) **VERFAHREN ZUM VERBINDEN VON MINDESTENS ZWEI FLÄCHENGEBILDEN, INSBESONDERE VON MINDESTENS ZWEI METALLBLECHEN FÜR EINE LEICHTBAUSTRUKTUR SOWIE VERBINDUNG UND LEICHTBAUSTRUKTUR**
METHOD FOR CONNECTION AT LEAST TWO PIECES OF SHEET MATERIAL, PARTICULARLY AT LEAST TWO METAL SHEETS FOR A LIGHTWEIGHT STRUCTURE AS WELL A JOINING AND LIGHTWEIGHT STRUCTURE
PROCEDE POUR ASSEMBLER AU MOINS DEUX STRUCTURES PLANES, NOTAMMENT AU MOINS DEUX TOLES DE METAL POUR UNE STRUCTURE DE CONSTRUCTION LEGERE, ASSEMBLAGE ET CONSTRUCTION LEGERE

(30) Priorität: 21.07.2005 DE 102005033992
(43) Veröffentlichungstag der Anmeldung: 23.04.2008
(73) Patentinhaber: Airbus Deutschland GmbH, 21129 Hamburg (DE)
(72) Erfinder: LITZENBERGER, Karsten, 21698 Harsefeld (DE); PACCHIONE, Marco, 22605 Hamburg (DE); VICHNIAKOV, Alexei, 21279 Wenzendorf (DE)
(74) Vertreter: Kopf, Korbinian Paul
(86) Internationale Anmeldenummer: PCT/EP2006/007167
(87) Internationale Veröffentlichungsnummer: WO 2007/009796

(56) Entgegenhaltungen:
- EP-A- 0 604 247
- EP-A- 1 291 279
- EP-A- 1 439 121
- WO-A-2005/007507
- US-A1- 2001 015 043
- ERITT J: "LASERSTRAHLSCHWEISSEN HOCHFESTER ALUMINIUMLEGIERUNGEN IM FLUGZEUGBAU" VDI Z, SPRINGER VDI VERLAG, DUSSELDORF, DE, Bd. 137, Nr. 6, 1. Juni 1995 (1995-06-01), Seiten 34-38, XP000508365 ISSN: 0042-1766

## Beschreibung

Die Erfindung betrifft ein Verfahren zum Verbinden von mindestens zwei Flächengebilden, insbesondere von mindestens zwei Metallblechen für eine Leichtbaustruktur.

Ein solches Verfahren ist aus dem Dokument EP-A-0 604 247 bekannt.

Weiterhin betrifft die Erfindung eine Verbindung zwischen zwei Flächengebilden, insbesondere zwischen zwei Metallblechen für eine Leichtbaustruktur, die nach Maßgabe des erfindungsgemäßen Verfahrens gebildet ist.

Darüber hinaus betrifft die Erfindung eine Leichtbaustruktur, insbesondere eine Rumpfzelle, eine Tragfläche, ein Höhen- oder Seitenleitwerk eines Luftfahrzeugs oder dergleichen, gebildet aus mehreren zusammengefügten Schalen und/oder Teilabschnitten einer Schale.

Metallbleche werden insbesondere im Flugzeugbau überwiegend durch Nietverbindungen miteinander verbunden. Derartig konventionell genietete Verbindungen weisen in der Regel im Nahtbereich Aufdickungen auf, um die auftretenden Nahtspannungen zu reduzieren, die sonst zu einer Materialermüdung führen könnten. Diese Aufdickungen werden beispielsweise durch einen zumindest bereichsweisen Materialabtrag außerhalb des Nahtbereichs, zum Beispiel durch chemische Ätzverfahren, mechanisches Fräsen oder dergleichen, erzeugt.

Die Herstellung der erforderlichen Aufdickungen im Nahtbereich bei konventionellen Nietverbindungen von Blechen gestaltet sich sehr zeit- und kostenintensiv.

Aufgabe der Erfindung ist es, ein Verfahren zur Herstellung einer Verbindung sowie eine Verbindung zwischen zwei Blechen einer Leichtbaustruktur, insbesondere für eine Schale und/oder einen Teil einer Schale zur Bildung einer Leichtbaustruktur eines Luftfahrzeugs, insbesondere einer Rumpfzelle, einer Tragfläche, eines Höhen- oder Seitenleitwerks oder dergleichen, zu schaffen, die keine Aufdickungen im Nahtbereich durch einen aufwändigen Materialabtrag außerhalb des Nahtbereiches erfordert und die gleichzeitig die statischen und schadenstoleranten Eigenschaften der Verbindungsnaht durch Schaffung eines zusätzlichen Lastpfads verbessert.

Die erfindungsgemäße Aufgabe wird durch ein Verfahren mit den Merkmalen des Patentanspruchs 1 gelöst.

Das erfindungsgemäße Verfahren zum Verbinden von mindestens zwei Flächengebilden, insbesondere von mindestens zwei Metallblechen für eine Leichtbaustruktur, umfasst hierbei die folgenden Schritte:
- Zusammenfügen der Flächengebilde auf Stoß unter Bildung eines Fügebereichs,
- mechanisches Bearbeiten der Flächengebilde und/oder des Fügebereichs,
- mechanische und/oder chemische Klebevorbehandlung der Flächengebilde und/oder des Fügebereichs und
- Aufkleben mindestens eines Verstärkungselements im Bereich einer Oberseite und/oder einer Unterseite des Fügebereichs, wobei das mindestens eine Verstärkungselement eine größere Breite als eine Breite des Fügebereichs aufweist.

Hierdurch können zwei Metallbleche ohne das Erfordernis eines außerhalb des Verbindungsbereichs erfolgenden Materialabtrags - der ansonsten insbesondere zur Erzeugung einer lokalen Aufdickung im Verbindungsbereich zur Reduzierung der auftretenden mechanischen Spannungen erforderlich ist - miteinander verbunden werden, wobei die auftretenden mechanischen Spannungen (im Nahtbereich) nunmehr durch das Aufkleben mindestens eines Verstärkungselements verringert werden. Dadurch wird insbesondere die Gefahr des Auftretens von Materialermüdungen verringert. Weiterhin entsteht durch das Verstärkungselement, dessen Breite zur Erzielung einer ausreichenden Überlappung vorzugsweise größer einer Breite des Fügebereichs ist, durch die Anbindung beider Flächengebilde ein zusätzlicher Lastpfad.
Infolge der mechanischen und/oder chemischen Klebevorbehandlung der Flächengebilde und/oder des Fügebereichs wird eine verbesserte Haftung des mindestens einen aufgeklebten Verstärkungselements erreicht.

Eine vorteilhafte Ausgestaltung der Erfindung sieht vor, dass auf mindestens ein Verstärkungselement zumindest bereichsweise mindestens ein weiteres Verstärkungselement aufgeklebt wird.
Hierdurch lässt sich die mechanische Belastbarkeit der Verbindung zwischen den Flächengebilden steigern.

In Gemäßheit einer vorteilhaften Ausgestaltung erfolgt das Zusammenfügen der Flächengebilde durch Reibrührschweißen, Laserschweißen, Schmelzschweißen, Löten oder dergleichen.
Die genannten Fügeverfahren (Schweißverfahren sowie das Löten) ermöglichen im Allgemeinen eine Stoßverbindung von Flächengebilden, insbesondere in der Form von Metallblechen mit einer geringen Materialdicke.

Eine weitere vorteilhafte Ausgestaltung des Verfahrens sieht vor, dass eine Materialdicke des Fügebereichs nach der mechanischen Bearbeitung kleiner oder gleich einer Materialdicke der Flächengebilde ist.
Hierdurch ist eine nahezu vollflächige Auflage der Verstärkungselemente im Bereich des Fügebereichs und der Flächengebilde gewährleistet.

Darüber hinaus wird die erfindungsgemäße Aufgabe durch eine Verbindung mit den Merkmalen des Patentanspruchs 11 gelöst,
wonach zur Bildung einer Verbindung zwischen zwei Flächengebilden, insbesondere zwischen zwei Metallblechen für eine Leichtbaustruktur, die Flächengebilde durch einen Fügebereich auf Stoß verbunden sind und zumindest im Bereich einer Oberseite und/oder einer Unterseite des Fügebereichs mindestens ein Verstärkungselement aufgeklebt ist.

Die erfindungsgemäße Verbindung erlaubt die schadenstolerante Verbindung von zwei Flächengebilden, insbesondere von zwei Metallblechen, ohne das Erfordernis einer Aufdickung durch einen außerhalb des Nahtbereichs erfolgenden Materialabtrag, beispielsweise mittels chemischem oder mechanischem Abtragen (Fräsen) oder dergleichen. Darüber hinaus wird durch das Aufkleben mindestens eines Verstärkungselements ein zusätzlicher Lastpfad geschaffen.

Ferner wird die erfindungsgemäße Aufgabe durch eine Leichtbaustruktur eines Luftfahrzeugs, insbesondere eine Rumpfzelle, eine Tragfläche, ein Höhen- oder Seitenleitwerk, gebildet aus mehreren zusammengefügten Schalen und/oder Teilen einer Schale, gemäß dem Patentanspruch 22 gelöst.
Erfindungsgemäß sind mindestens zwei Schalen und/oder mindestens zwei Teilabschnitte mindestens einer Schale zur Bildung der Leichtbaustruktur mittels mindestens einer Verbindung nach Maßgabe eines der Ansprüche 11 bis 21 zusammengefügt.

Weitere vorteilhafte Ausgestaltungen der Anordnung sind in den weiteren Patentansprüchen dargelegt.

In der Zeichnung zeigt:
- Fig. 1: eine Querschnittsdarstellung durch zwei Metallbleche vor einem ersten Verfahrensschritt,
- Fig. 2: eine Querschnittsdarstellung durch zwei mittels eines Fügebereichs verbundene Metallbleche nach einem ersten Verfahrensschritt,
- Fig. 3: eine Querschnittsdarstellung eines Fügebereichs mit einem aufgekleb- ten Verstärkungselement nach weiteren Verfahrensschritten und
- Fig. 4: eine nach Maßgabe des Verfahrens hergestellte Verbindung mit zwei aufgeklebten Verstärkungselementen.

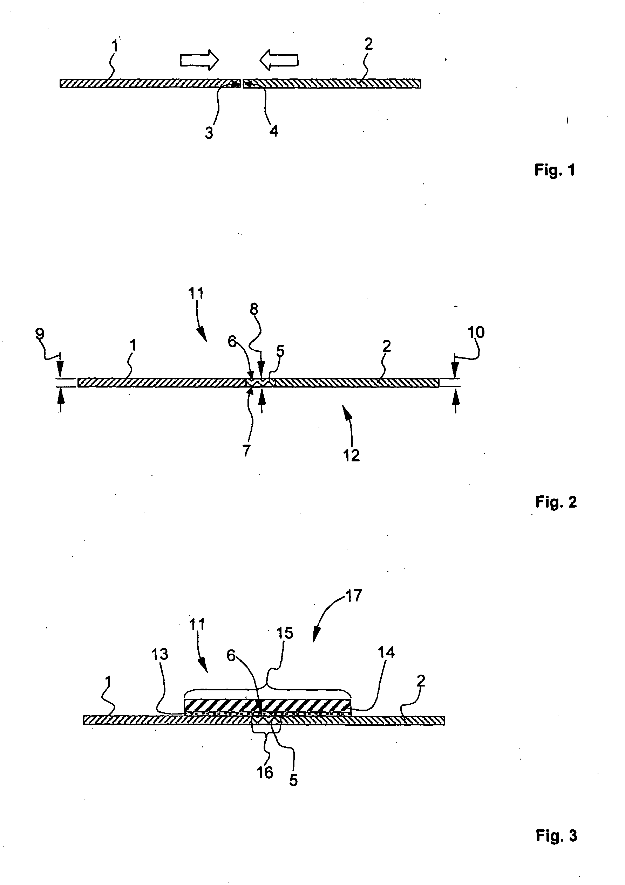

In der Zeichnung weisen gleiche konstruktive Elemente jeweils dieselbe Bezugsziffer auf. Es wird nunmehr zur Erläuterung des erfindungsgemäßen Verfahrens sowie einer mittels des Verfahrens gebildeten Verbindung in Gesamtheit auf die Fig. 1 bis 4 Bezug genommen.

Zur Durchführung des Verfahrens werden ausweislich der Fig. 1 in einem ersten Verfahrensschritt beispielsweise zwei Metallbleche 1,2 als Flächengebilde auf Stoß, das heißt entlang von sich stirnseitig gegenüberstehenden Längskanten 3,4, zueinander ausgerichtet. Je nach dem gewählten Fügeprozess werden die Bereiche der Längskanten 3,4 entsprechend vorbehandelt. Die Vorbehandlung erfolgt beispielsweise durch eine chemische oder mechanische Vorbehandlung der Oberflächen und/oder der Längskanten 3,4, einen mechanischen Abtrag der Längskanten 3,4 oder ähnliche Vorbehandlungsprozesse.

In einem zweiten Verfahrensschritt werden die Metallbleche 1,2 dann, wie in der Fig. 2 dargestellt, endgültig entlang der Längskanten 3,4 (vgl. Fig. 1) unter Bildung eines Fügebereichs 5 zusammengefügt. Hierbei gehen die Längskanten 3,4 in den Fügebereich 5 auf und weisen daher in den Fig. 2 bis 4 keine Bezugsziffer mehr auf. Das Zusammenfügen der Metallbleche 1,2 in Richtung der beiden Blockpfeile kann beispielsweise durch Schmelzschweißen, insbesondere durch Laserschweißen oder dergleichen, erfolgen, wobei dann eine zumindest teilweise Anschmelzung der Metallbleche 1,2 im Fügebereich 5 erfolgt. Alternativ kann das Zusammenfügen auch ohne Anschmelzung der Metallbleche 1,2, beispielsweise durch Reibrührschweißen, Löten oder dergleichen, erfolgen. Durch das Zusammenfügen entsteht der Fügebereich 5. Hierbei ist das erfindungsgemäße Verfahren nicht auf die Verbindung von Metallblechen 1,2 beschränkt zu sehen. Vielmehr können auch andere Werkstoffe durch einen beliebigen Fügeprozess miteinander verbunden werden.

In einem dritten Verfahrensschritt werden eine Oberseite 6 und/oder eine Unterseite 7 zumindest einer bereichsweisen mechanischen und/oder chemischen Bearbeitung, beispielsweise durch Schleifen, Fräsen, Hobeln, Abziehen oder dergleichen unterzogen. Infolge der Bearbeitung verringert sich eine Materialdicke 8 des Fügebereichs 5.

In einem Zwischenschritt können gegebenenfalls eine Oberseite 11 und eine Unterseite 12 der Metallbleche 1,2 und/oder die Oberseite 6 und/oder die Unterseite 7 des Fügebereichs 5 noch mit einem Korrosionsschutz versehen werden. Erforderlichenfalls können in einem weiteren Zwischenschritt die genannten Bereiche zusätzlich einer Klebevorbehandlung zur Haftungsverbesserung unterzogen werden. Die Haftungsverbesserung kann beispielsweise durch das Aufbringen von Haftvermittlern, Primern, Ätzverfahren oder dergleichen erreicht werden.

In einem vierten Verfahrensschritt wird ausweislich der Fig. 3 zunächst eine Klebeschicht 13 auf die Oberseite 6 des Fügebereichs 5 und auf die hieran angrenzende Oberseite 11 der Metallbleche 1,2 und/oder auf eine Unterseite des Versteifungselements 14 aufgetragen. Die Klebeschicht 13 kann hierbei als Klebefilm, Klebefolie, flüssiger Kleber oder dergleichen ausgebildet sein. Auf der Klebeschicht 13 wird anschließend ein Verstärkungselement 14 zur Verklebung aufgebracht. Als Verstärkungselement 14 wird im gezeigten Ausführungsbeispiel ein Flachprofil (Vollmaterial) bzw. ein Metallstreifen mit einer im Wesentlichen rechteckförmigen Querschnittsgeometrie verwendet. Abweichend hiervon können als Verstärkungselemente Verstärkungsprofile mit einer nahezu beliebigen Querschnittsgeometrie, insbesondere mit einer T-förmigen, L-förmigen, U-förmigen, Z-förmigen oder dergleichen, zur Verstärkung des Fügebereichs 5 eingesetzt werden. Weiterhin kann das Verstärkungselement 14 durch ein Rechteckhohlprofil, ein Flachprofil (Vollmaterial), linien- und kurvenförmige Metallstreifen oder dergleichen mit einer im Wesentlichen rechteckförmigen Querschnittsgeometrie gebildet werden, die den Nahtverlauf vollständig oder zumindest teilweise bedecken.

Das Verstärkungselement 14 oder die Verstärkungselemente können auch mit einem Verbundwerkstoff, beispielsweise mit einem faserverstärkten Epoxydharz oder dergleichen, gebildet werden. Die Verstärkungselemente 14 können ferner mit einem faserverstärkten Polyesterharz, Phenolharz oder BMI-Harz gebildet werden. Als Verstärkungsfasern eignen sich alle organischen und/oder anorganischen Fasern, Stapelfasern oder Whiskerfasern. Beispielsweise können als Verstärkungsfasern Kohlefasern, Glasfasern, Aramidfasern oder dergleichen eingesetzt werden.

Das Verstärkungselement 14 wird beispielsweise mit einem durch Vernetzung aushärtbaren duroplastischen Kunststoffmaterial, insbesondere einem Epoxydharz, einem Phenolharz, einem Polyesterharz, einem BMI-Harz oder dergleichen als Klebemittel mit den Metallblechen 1,2 bzw. dem Fügebereich 5 verklebt. Gegebenenfalls kann in das Klebemittel auch eine Faserverstärkung, beispielsweise mit Kohlefasern, Glasfasern, Aramidfasern oder dergleichen, eingebettet werden. Anstatt eines duroplastischen Kunststoffmaterials als Klebemittel kann auch ein Klebemittel auf einer thermoplastischen oder anderen Grundlage verwendet werden.

Eine Breite 15 des Verstärkungselements 14 ist hierbei bevorzugt größer als eine Breite 16 des Fügebereichs 5, um eine ausreichende Überlappung zur Anbindung der Metallbleche 1,2 an das Verstärkungselement 14 zu erreichen. Damit sind die Metallbleche 1,2 zum einen durch den Fügebereich 5 miteinander verbunden. Zum anderen wird durch das Verstärkungselement 14 darüber hinaus ein zweiter, quer zum Fügebereich 5 ausgerichteter Lastpfad gebildet, der unter anderem eine Reduzierung der Nahtspannungen erlaubt, die unter anderem zu Ermüdungsbrüchen führen können. Darüber hinaus ist durch das Verstärkungselement 14 eine Redundanz gegeben, da bei einem mechanischen Versagen des Fügebereichs 5 (noch) kein vollständiger Bruch einer mittels des erfindungsgemäßen Verfahrens gebildeten Verbindung 17 eintritt.

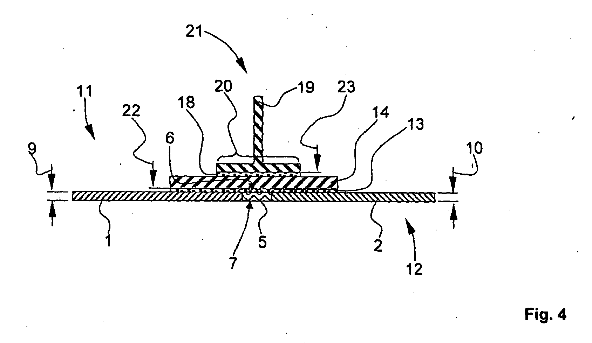

Die Fig. 4 zeigt eine Variante des erfindungsgemäßen Verfahrens, bei der in einem gleichen oder in einem zusätzlichen Verfahrensschritt mittels einer weiteren Klebeschicht 18 ein weiteres Verstärkungselement 19 mit einer Breite 20 auf das Verstärkungselement 14 aufgeklebt wird. Hierbei ist das Verstärkungselement 19 als ein Verstärkungsprofil, insbesondere als ein Stringer oder dergleichen, ausgebildet. Als Verstärkungselement 19 eignen sich alle gängigen Stringerprofilformen. Durch das zusätzliche Verstärkungselement 19 lässt sich die mechanische Festigkeit einer nach Maßgabe dieser Variante des erfindungsgemäßen Verfahrens gebildeten Verbindung 21 steigern.

Anhand der Darstellung der Fig. 4 soll weiterhin der grundsätzliche Aufbau einer mittels des erfindungsgemäßen Verfahrens gebildeten Verbindung zwischen zwei Flächengebilden, insbesondere zwischen Metallblechen 1,2, näher erläutert werden.

Die Metallbleche 1,2 sind mittels des Fügebereichs 5 verbunden. Die Verbindung der Metallbleche 1,2 bzw. die Bildung des Fügebereichs 5 erfolgt beispielsweise durch Reibrührschweißverfahren, Laserschweißverfahren, Schmelzschweißverfahren oder durch andere Fügeprozesse, wie zum Beispiel durch Löten. Die Materialdicke 8 des Fügebereichs 5 entspricht ungefähr der Materialdicke 9,10 der Metallbleche 1,2 (vgl. Fig. 2). Nach dem Zusammenfügen der Metallbleche 1,2 werden die Oberseite 6 des Fügebereichs 5, die Unterseite 7 des Fügebereichs 5 sowie die Oberseite 11 und die Unterseite 12 der Metallbleche 1,2 einer geeigneten Nachbehandlung, beispielsweise durch Schleifen, Fräsen, Hobeln, Abziehen oder dergleichen unterzogen. Weiterhin kann es erforderlich sein, die genannten Bereiche noch mit einem Korrosionsschutz zu versehen und gegebenenfalls eine Vorbehandlung zur Haftungsverbesserung, insbesondere für eine Verbesserung der Haftung der Klebeschicht 13, durchzuführen. Mittels der Klebeschicht 13 ist das Verstärkungselement 14 in Gestalt eines Flachprofils mit einem im Wesentlichen rechteckförmigen Querschnitt auf den Fügebereich 5 und die beidseitig angrenzenden Bereiche der Oberseite 11 der Metallbleche 1,2 vorzugsweise vollflächig aufgeklebt. Eine Breite 15 des Verstärkungselements 14 ist erheblich größer als eine Breite 16 des Fügebereichs 5 (vgl. Fig. 2), um eine ausreichende Überlappung zur Anbindung der Metallbleche 1,2 zu erreichen. Eine Materialdicke 22 der Klebeschicht 13 ist deutlich geringer als die Materialdicke 8 des Fügebereichs 5 (vgl. Fig. 2) sowie die Materialdicke 9,10 der Metallbleche 1,2. Mittels der weiteren Klebeschicht 18 mit einer Materialdicke 23 ist das Verstärkungselement 19 vorzugsweise vollflächig mit dem Verstärkungselement 14 verklebt.

Das Aufbringen des weiteren Verstärkungselements 19 ist nicht zwingend erforderlich. Es kann ausreichend sein, die Metallbleche 1,2 mittels des Fügebereichs 5 entlang der Längskanten 3,4 stirnseitig zu verbinden und anschließend das Verstärkungselement 14 mittels der Klebeschicht 13 auf die Metallbleche 1,2 und den Fügebereich 5 aufzukleben (vgl. Fig. 3). Anstatt des in der Fig. 3 dargestellten Verstärkungselements 14 in Form eines Flachprofils bzw. Metallstreifens mit einer im Wesentlichen rechteckförmigen Querschnittsgeometrie kann auch ein Verstärkungselement mit einer anderen Querschnittsgeometrie auf den Fügebereich 5 und die angrenzenden Metallbleche 1,2 aufgeklebt werden. Grundsätzlich können die Verstärkungselemente mit Profilen mit nahezu beliebigen Querschnittsgeometrien, insbesondere mit einer T-förmigen, einer L-förmigen, einer U-förmigen, einer Z-förmigen Querschnittsgeometrie oder dergleichen, gebildet werden. Weiterhin ist es möglich, Verstärkungselemente auf die Oberseite 11 und/oder die Unterseite 12 der Metallbleche 1,2 sowie die Oberseite 6 und/oder die Unterseite 7 des Fügebereichs 5 aufzukleben.

Die Klebeschichten 13,18 sind mit einem aushärtbaren Epoxydharz, einem Phenolharz, einem Polyesterharz, einem BMI-Harz oder dergleichen gebildet, das gegebenenfalls eine Faserverstärkung mit Kohlefasern, Glasfasern, Aramidfasern oder dergleichen aufweisen kann. Alternativ können die Klebeschichten 13,18 auch mit einem thermoplastischen Klebematerial gebildet sein.

Die Metallbleche 1,2 können mit Aluminium oder mit einer Aluminiumlegierung, wie zum Beispiel einer Al-Cu-Legierung, einer Al-Zn-Legierung, einer Al-Li-Legierung, einer Al-Mg-Sc-Legierung oder dergleichen gebildet sein. Weiterhin können die Metallbleche mit Magnesium, mit einer Magnesiumlegierung, mit Titan, mit einer Titanlegierung, mit Stahl, mit einer Stahllegierung oder dergleichen gebildet sein. Weiterhin können die Metallbleche 1,2 mit einer beliebigen Kombination der genannten Metalle oder Metalllegierungen gebildet sein. Das Verfahren ist für Metallbleche 1,2 mit einer beliebigen Materialdicke, bevorzugt jedoch für Metallbleche 1,2 mit einer Materialdicke zwischen 0,2 mm und 10 mm, anwendbar.

Die Verstärkungselemente 14,19 können gleichfalls mit Aluminium oder mit einer Aluminiumlegierung, wie zum Beispiel einer Al-Cu-Legierung, einer Al-Zn-Legierung, einer Al-Li-Legierung, einer Al-Mg-Sc-Legierung, oder dergleichen gebildet sein. Ferner können die Verstärkungselemente 14,19 mit Magnesium, mit einer Magnesiumlegierung, mit Titan, mit einer Titanlegierung, mit Stahl, mit einer Stahllegierung oder dergleichen gebildet sein. Darüber hinaus können die Verstärkungselemente 14,19 mit einer beliebigen Kombination der genannten Metalle oder Metalllegierungen gebildet sein.

Die Verstärkungselemente 14,19 können auch mit Verbundwerkstoffen, beispielsweise mit faserverstärkten Epoxyharzen gebildet sein. Weiterhin können auch faserverstärkte Phenolharze, Polyesterharze, BMI-Harze oder dergleichen verwendet werden. Als Verstärkungsfasern kommen alle organischen und anorganischen Fasern, Stapelfasern oder Whiskerfasern in Betracht.

Die Verstärkungselemente 14,19 können auch mit Metall-Matrix-Verbundwerkstoffen, beispielsweise mit einer Aluminium- oder Magnesiummatrix gebildet sein. Weiterhin können auch Titanlegierungen oder dergleichen als Matrix verwendet werden. Als Verstärkungsfasern können wiederum alle organischen und anorganischen Fasern, Stapelfasern oderWhiskerfasern eingesetzt werden.

Gegebenenfalls können die Verstärkungselemente 14,19 als eine Sandwichstruktur, beispielsweise in der Form einer Kernstruktur (Honigwabe, Faltwabe oder dergleichen) mit einem geeigneten Kunststoffmaterial, das beidseitig mit Deckschichten aus einer Aluminiumlegierung oder Magnesiumlegierung versehen ist, ausgebildet sein.

Die zusammen zu fügenden Metallbleche 1,2 können beispielsweise eine Schale und/oder Teilabschnitte einer Schale einer Leichtbaustruktur, insbesondere eine Rumpfzelle, eine Tragfläche, ein Höhen- oder Seitenleitwerk eines Luftfahrzeugs oder dergleichen sein, so dass sich mittels des erfindungsgemäßen Verfahrens bzw. der erfindungsgemäßen Verbindung die Schalen und/oder die Teile der Schalen zu einer der genannten Leichtbaustrukturen insbesondere eines Luftfahrzeugs zusammenfügen lassen.

### Bezugszeichenliste

- 1: Metallblech
- 2: Metallblech
- 3: Längskante
- 4: Längskante
- 5: Fügebereich
- 6: Oberseite (Fügebereich)
- 7: Unterseite (Fügebereich)
- 8: Materialdicke (Fügebereich)
- 9: Materialdicke (Metallblech)
- 10: Materialdicke (Metallblech)
- 11: Oberseite (Metallbleche)
- 12: Unterseite (Metallbleche)
- 13: Klebeschicht
- 14: Verstärkungselement
- 15: Breite (Verstärkungselement)
- 16: Breite (Fügebereich)
- 17: Verbindung
- 18: Klebeschicht
- 19: Verstärkungselement
- 20: Breite (Verstärkungselement)
- 21: Verbindung
- 22: Materialdicke (Klebeschicht)
- 23: Materialdicke (Klebeschicht)

## Patentansprüche

1. Verfahren zum Verbinden von mindestens zwei Metallblechen (1,2) für eine Leichtbaustruktur mit den Schritten:
a) Zusammenfügen der Metallbleche (1,2) auf Stoß unter Bildung eines Fügebereichs (5), das Verfahren ist **gekennzeichnet durch** die weiteren Schritte:
b) mechanisches Bearbeiten einer Oberseite und/oder Unterseite des Fügebereichs (5),
c) mechanische und/oder chemische Klebevorbehandlung der Metallbleche (1,2) und/oder des Fügebereichs (5) und
d) Aufkleben mindestens eines einen zusätzlichen Lastpfad schaffenden Verstärkungselements (14,19) im Bereich einer Oberseite (6) und/oder einer Unterseite (7) des Fügebereichs (5), wobei das mindestens eine Verstärkungselement (14,19) eine größere Breite (15,20) als eine Breite (16) des Fügebereichs (5) aufweist und vollflächig aufliegt.

2. Verfahren nach Anspruch 1, **dadurch gekennzeichnet, dass** auf mindestens ein Verstärkungselement (14,19) zumindest bereichsweise mindestens ein weiteres Verstärkungselement (14,19) aufgeklebt wird.

3. Verfahren nach Anspruch 1 oder 2, **dadurch gekennzeichnet, dass** das Zusammenfügen der Metallbleche (1,2) durch Reibrührschweißen, Laserschweißen, Schmelzschweißen, Löten oder dergleichen erfolgt.

4. Verfahren nach einem der Ansprüche 1 bis 3, **dadurch gekennzeichnet, dass** eine Materialdicke (8) des Fügebereichs (5) nach der mechanischen Bearbeitung kleiner oder gleich einer Materialdicke der Metallbleche (1,2) ist.

5. Verfahren nach einem der Ansprüche 1 bis 4, **dadurch gekennzeichnet, dass** das Verstärkungselement oder die Verstärkungselemente (14,19) mit einem duroplastischen Kunststoffmaterial, insbesondere einem Epoxydharz, einem Phenolharz, einem Polyesterharz, einem BMI-Harz oder dergleichen, aufgeklebt werden.

6. Verfahren nach einem der Ansprüche 1 bis 5, **dadurch gekennzeichnet, dass** das Verstärkungselement oder die Verstärkungselemente (14,19) als Verstärkungsprofile, insbesondere als T-Profile, L-Profile, U-Profile, Z-Profile, Rechteckprofile, Flachprofile, Metallstreifen oder dergleichen ausgebildet werden.

7. Verfahren nach einem der Ansprüche 1 bis 6, **dadurch gekennzeichnet, dass** das mindestens eine Verstärkungselement (14,19) mit einem metallischen Material, insbesondere mit Aluminium; mit einer Aluminiumlegierung, mit Titan, mit einer Titanlegierung, mit Stahl, mit einer Stahllegierung oder dergleichen, gebildet ist.

8. Verfahren nach einem der Ansprüche 1 bis 7, **dadurch gekennzeichnet, dass** das mindestens eine Verstärkungselement (14,19) mit einem Verbundwerkstoff, insbesondere mit einem faserverstärkten Kunststoffmaterial, gebildet ist.

9. Verfahren nach einem der Ansprüche 1 bis 8, **dadurch gekennzeichnet, dass** die Metallbleche (1,2) mit einer Materialdicke zwischen 0,2 mm und 10 mm gebildet werden.

10. Verfahren nach einem der Ansprüche 1 bis 9, **dadurch gekennzeichnet, dass** die Metallbleche (1,2) mit Aluminium, mit einer Aluminiumlegierung, mit Titan, mit einer Titanlegierung, mit Stahl, mit einer Stahllegierung oder dergleichen gebildet werden.

11. Verbindung (17,21) zwischen mindestens zwei Metallblechen (1,2) für eine Leichtbaustruktur, gemäß dem Verfahren nach einem der Ansprüche 1 bis 10 gebildet, wobei die Metallbleche (1,2) durch einen Fügebereich (5) auf Stoß verbunden sind und zumindest im Bereich einer Oberseite (6) und/oder einer Unterseite (7) des Fügebereichs (5) mindestens ein vollflächig aufliegendes Verstärkungselement (14,19) aufgeklebt ist, wobei eine Breite (15,20) des mindestens einen Verstärkungselements (14,19) größer als eine Breite (16) des Fügebereichs (5) ist, um durch eine Überlappung einen zusätzlichen Lastpfad zu schaffen.

12. Verbindung (17,21) nach Anspruch 11, **dadurch gekennzeichnet, dass** auf mindestens ein Verstärkungselement (14,19) zumindest bereichsweise ein weiteres Verstärkungselement (14,19) aufgeklebt ist.

13. Verbindung (17,21) nach Anspruch 11 oder 12, **dadurch gekennzeichnet, dass** eine Materialdicke (8) des Fügebereichs (5) kleiner oder gleich einer Materialdicke (9,10) der Metallbleche (1,2) ist.

14. Verbindung (17,21) nach einem der Ansprüche 11 bis 13, **dadurch gekennzeichnet, dass** das mindestens eine Verstärkungselement (14,19) mittels mindestens einer Klebeschicht (13,18) aufgeklebt ist, wobei eine Materialdicke (22,23) der wenigstens einen Klebeschicht (13,18) kleiner als die Materialdicke der Flächengebilde und/oder der Materialdicke (8) des Fügebereichs (5) ist.

15. Verbindung (17,21) nach einem der Ansprüche 11 bis 14, **dadurch gekennzeichnet, dass** das mindestens eine Verstärkungselement (14,19) mit Verstärkungsprofilen, insbesondere mit T-Profilen, L-Profilen, U-Profilen, Z-Profilen, Rechteckprofilen, Flachprofilen, Metallstreifen oder dergleichen, gebildet ist.

16. Verbindung (17,21) nach einem der Ansprüche 11 bis 15, **dadurch gekennzeichnet, dass** das mindestens eine Verstärkungselement (14,19) mit einem metallischen Material, insbesondere mit Aluminium, mit einer Aluminiumlegierung, mit Titan, mit einer Titanlegierung, mit Stahl, mit einer Stahllegierung oder dergleichen, gebildet ist.

17. Verbindung nach einem der Ansprüche 11 bis 16, **dadurch gekennzeichnet, dass** das mindestens eine Verstärkungselement (14,19) mit einem Verbundwerkstoff, insbesondere mit einem faserverstärkten Kunststoffmaterial, gebildet ist.

18. Verbindung (17,21) nach einem der Ansprüche 11 bis 17, **dadurch gekennzeichnet, dass** die Metallbleche (1,2) eine Materialdicke zwischen 0,2 mm und 10 mm aufweisen.

19. Verbindung (17,21) nach einem der Ansprüche 11 bis 18, **dadurch gekennzeichnet, dass** die Metallbleche (1,2) mit Aluminium, mit einer Aluminiumlegierung mit Titan, mit einer Titanlegierung, mit Stahl, mit einer Stahllegierung oder dergleichen gebildet sind.

20. Verbindung (17,21) nach einem der Ansprüche 11 bis 19, **dadurch gekennzeichnet, dass** die mindestens eine Klebeschicht (13,18) mit einem duroplastischen Kunststoffmaterial, insbesondere mit einem Epoxydharz, mit einem Polyesterharz, mit einem BMI-Harz oder dergleichen gebildet ist.

21. Verbindung (17,21) nach einem der Ansprüche 11 bis 20, **dadurch gekennzeichnet, dass** die die Metallbleche (1,2) jeweils mindestens einen Teilabschnitt einer Schale für eine Komponente eines Luftfahrzeugs, insbesondere eine Rumpfzelle eines Luftfahrzeugs, bilden.

22. Leichtbaustruktur, insbesondere eine Rumpfzelle, eine Tragfläche, ein Höhen- oder Seitenleitwerk eines Luftfahrzeugs oder dergleichen, gebildet aus mehreren zusammengefügten Schalen und/oder Teilabschnitten einer Schale, **dadurch gekennzeichnet, dass** mindestens zwei Schalen und/oder mindestens zwei Teilabschnitte mindestens einer Schale zur Bildung der Leichtbaustruktur mittels mindestens einer Verbindung nach Maßgabe eines der Ansprüche 11 bis 21 zusammengefügt sind.

## Claims

1. A method for connecting at least two metal sheets (1, 2) for a lightweight structure, comprising the steps of:
a) joining the metal sheets (1, 2) as butt joint connections by forming a joining region (5),
wherein the method is **characterized by** the further steps of:
b) mechanical processing of a top and/or bottom of the joining region,
c) mechanical and/or chemical adhesive pre-treatment of the metal sheets (1, 2) and/or of the joining region (5), and
d) pasting-on at least one reinforcement element (14, 19), which creates an additional load path, in the region of the top (6) and/or of the bottom (7) of the joining region (5), the at least one reinforcement element (14, 19) having a width (15, 20) being wider than the width (16) of the joining region (5), and abuting over the entire area.

2. The method of claim 1, **characterized in that** at least one further reinforcement element (14, 19) is pasted onto at least one reinforcement element (14, 19), at least in partial regions.

3. The method of claim 1 or 2, **characterized in that** joining the metal sheets (1, 2) takes place by one of friction stir welding, laser welding, fusion welding, soldering and the like.

4. The method of one of claims 1 to 3, **characterized in that** the material thickness 88) of the joining region (5) after mechanical processing is less than, or equal to, the material thickness of the metal sheets (1, 2).

5. The method of one of claims 1 to 4, **characterized in that** the reinforcement element or the reinforcement elements (14, 19) is/are pasted on by means of one of a duroplastic plastic material, in particular an epoxy resin, a phenolic resin, a polyester resin, a BMI resin and the like.

6. The method of one of claims 1 to 5, **characterized in that** the reinforcement element or the reinforcement elements (14, 19) is/are designed as reinforcement profiles, in particular as one of T-profiles, L-profiles, U-profiles, Z-profiles, rectangular profiles, flat profiles, metal strips and the like.

7. The method of one of claims 1 to 6, **characterized in that** the at least one reinforcement element (14, 19) is formed with a metal material, in particular with one of aluminium, an aluminium alloy, titanium, a titanium alloy, steel, a steel alloy and the like.

8. The method of one of claims 1 to 7, **characterized in that** the at least one reinforcement element (14, 19) is formed with a composite material, in particular with a fibre-reinforced plastic material.

9. The method of one of claims 1 to 8, **characterized in that** the metal sheets (1, 2) are formed with a material thickness of between 0.2 mm and 10 mm.

10. The method of one of claims 1 to 9, **characterized in that** the metal sheets (1, 2) are formed with one of aluminium, an aluminium alloy, titanium, a titanium alloy, steel, a steel alloy and the like.

11. A connection (17,21) between at least two metal sheets (1, 2) for a lightweight structure, formed according to the method of one of claims 1 to 10, wherein the metal sheets (1, 2) are butt-joint connected by a joining region (5), and at least in the region of at least one of a top 86) and a bottom (7) of the joining region (5) at least one reinforcement element (14, 19) that is abutting over the entire area is pasted on, wherein a width (15, 20) of the at least one reinforcement element (14, 19) is wider than a width (16) of the joining region (5) so as to, by means of an overlap, create an additional load path.

12. The connection (17, 21) of claim 11, **characterized in that** at least one further reinforcement element (14, 19) is pasted onto at least one reinforcement element (14, 19), at least in partial regions.

13. The connection (17, 21) of claim 11 or 12, **characterized in that** a material thickness (8) of the joining region (5) is less than, or equal to, a material thickness (9, 10) of the metal sheets (1,2).

14. The connection (17, 21) of one of claims 11 to 13, **characterized in that** the at least one reinforcement element (14, 19) is pasted on by means of at least one adhesive layer (13, 18), wherein a material thickness (22, 23) of the at least one adhesive layer (13, 18) is thinner than at least one of the material thickness of the sheet-like formations and the material thickness (8) of the joining region (5).

15. The connection (17, 21) of one of claims 11 to 14, **characterized in that** the at least one reinforcement element (14, 19) is formed with reinforcement profiles, in particular with one of T-profiles, L-profiles, U-profiles, Z-profiles, rectangular profiles, flat profiles, metal strips and the like.

16. The connection (17, 21) of one of claims 11 to 15, **characterized in that** the at least one reinforcement element (14, 19) is formed with a metal material, in particular with one of aluminium, an aluminium alloy, titanium, a titanium alloy, steel, a steel alloy and the like.

17. The connection (17, 21) of one of claims 11 to 16, **characterized in that** the at least one reinforcement element (14, 19) is formed with a composite material, in particular with a fibre-reinforced plastic material.

18. The connection (17, 21) of one of claims 11 to 17, **characterized in that** the metal sheets (1, 2) comprise a material thickness of between 0.2 mm and 10 mm.

19. The connection (17, 21) of one of claims 11 to 18, **characterized in that** the metal sheets (1, 2) are formed with one of aluminium, an aluminium alloy, titanium, a titanium alloy, steel, a steel alloy and the like.

20. The connection (17,21) of one of claims 11 to 19, **characterized in that** the at least one adhesive layer (13, 18) is formed with a duroplastic plastic material, in particular with one of an epoxy resin, a polyester resin, a BMI resin and the like.

21. The connection (17,21) of one of claims 11 to 20, **characterized in that** the metal sheets (1, 2) in each case form at least a partial section of a shell for a component of an aircraft, in particular a fuselage cell of an aircraft.

22. A lightweight structure, in particular one of a fuselage cell, an aerofoil, a horizontal and a vertical tail unit of an aircraft and the like, formed from several joined shells and/or partial sections of a shell, **characterized in that** at least two shells and/or at least two partial sections of at least one shell are joined to form the lightweight structure by means of at least one connection according to one of claims 11 to 21.

## Revendications

1. Procédé d'assemblage d'au moins deux tôles métalliques (1, 2) pour une structure en construction légère, comprenant les étapes :
a) assemblage en bout à bout des tôles métalliques (1, 2) en formant une zone de jointoiement (5),
le procédé étant **caractérisé par** les étapes suivantes :
b) traitement mécanique d'une face supérieure et/ou d'une face inférieure de la zone de jointoiement (5),
c) pré-traitement de collage chimique et/ou mécanique des tôles métalliques (1, 2) et/ou de la zone de jointoiement (5) et
d) collage d'au moins un élément de renforcement (14, 19), créant une voie de charge supplémentaire, dans la zone d'une face supérieure (6) et/ou d'une face inférieure (7) de la zone de jointoiement (5), le au moins un élément de renforcement (14, 19) présentant une largeur plus grande (15, 20) qu'une largeur (16) de la zone de jointoiement (5) et s'appliquant sur toute la surface.

2. Procédé suivant la revendication 1, **caractérisé en ce qu'**au moins un autre élément de renforcement (14, 19) est collé au moins par zones sur au moins un élément de renforcement (14, 19).

3. Procédé suivant l'une des revendications 1 et 2, **caractérisé en ce que** l'assemblage des tôles métalliques (1, 2) s'effectue par soudage par friction-agitation, soudage au laser, soudage par fusion, brasage ou analogues.

4. Procédé suivant l'une des revendications 1 à 3, **caractérisé en ce qu'**une épaisseur de matériau (8) de la zone de jointoiement (5), après le traitement mécanique, est inférieure ou égale à une épaisseur de matériau des tôles métalliques (1, 2).

5. Procédé suivant l'une des revendications 1 à 4, **caractérisé en ce que** l'élément de renforcement ou les éléments de renforcement (14, 19) sont collés par une matière plastique thermodurcissable, en particulier une résine époxy, une résine phénolique, une résine polyester, une résine BMI (bismaléimide) ou analogues.

6. Procédé suivant l'une des revendications 1 à 5, **caractérisé en ce que** l'élément de renforcement ou les éléments de renforcement (14, 19) sont réalisés sous forme de profilés de renforcement, en particulier sous forme de profilés en T, de profilés en L, de profilés en U, de profilés en Z, de profilés rectangulaires, de profilés plats, de rubans métalliques ou analogues.

7. Procédé suivant l'une des revendications 1 à 6, **caractérisé en ce que** le au moins un élément de renforcement (14, 19) est réalisé en un matériau métallique, en particulier en aluminium ; en un alliage d'aluminium, en titane, en un alliage de titane, en acier, en un alliage d'acier ou analogues.

8. Procédé suivant l'une des revendications 1 à 7, **caractérisé en ce que** le au moins un élément de renforcement (14, 19) est réalisé en un matériau composite, en particulier en une matière plastique renforcée par fibres.

9. Procédé suivant l'une des revendications 1 à 8, **caractérisé en ce que** les tôles métalliques (1, 2) sont formées avec une épaisseur de matériau comprise entre 0,2 mm et 10 mm.

10. Procédé suivant l'une des revendications 1 à 9, **caractérisé en ce que** les tôles métalliques (1, 2) sont réalisées en aluminium, en un alliage d'aluminium, de titane, en un alliage de titane, en acier, en un alliage d'acier ou analogues.

11. Assemblage (17, 21) entre au moins deux tôles métalliques (1,2) pour une structure en construction légère, formé conformément au procédé suivant l'une des revendications 1 à 10, assemblage dans lequel les tôles métalliques (1, 2) sont assemblées en bout à bout par une zone de jointoiement (5), au moins un élément de renforcement (14, 19) s'appliquant sur toute la surface est collé au moins dans la zone d'une face supérieure (6) et/ou d'une face inférieure (7) de la zone de jointoiement (5), une largeur (15, 20) de le au moins un élément de renforcement (14, 19) étant plus grande qu'une largeur (16) de la zone de jointoiement (5), pour créer une voie de charge supplémentaire par un chevauchement.

12. Assemblage (17, 21) suivant la revendication 11, **caractérisé en ce qu'**un autre élément de renforcement (14, 19) est collé au moins par zones sur au moins un élément de renforcement (14, 19).

13. Assemblage (17, 21) suivant l'une des revendications 11 et 12, **caractérisé en ce qu'**une épaisseur de matériau (8) de la zone de jointoiement (5) est inférieure ou égale à une épaisseur de matériau (9, 10) des tôles métalliques (1, 2).

14. Assemblage (17, 21) suivant l'une des revendications 11 à 13, **caractérisé en ce que** le au moins un élément de renforcement (14, 19) est collé au moyen d'au moins une couche de colle (13, 18), une épaisseur de matériau (22, 23) de la au moins une couche de colle (13, 18) étant plus petite que l'épaisseur de matériau de la structure plane et/ou l'épaisseur de matériau (8) de la zone de jointoiement (5).

15. Assemblage (17, 21) suivant l'une des revendications 11 à 14, **caractérisé en ce que** le au moins un élément de renforcement (14, 19) est formé par des profilés de renforcement, en particulier par des profilés en T, des profilés en L, des profilés en U, des profilés en Z, des profilés rectangulaires, des profilés plats, des rubans métalliques ou analogues.

16. Assemblage (17, 21) suivant l'une des revendications 11 à 15, **caractérisé en ce que** le au moins un élément de renforcement (14, 19) est réalisé en un matériau métallique, en particulier en aluminium, en un alliage d'aluminium, en titane, en un alliage de titane, en acier, en un alliage d'acier ou analogues.

17. Assemblage suivant l'une des revendications 11 à 16, **caractérisé en ce que** le au moins un élément de renforcement (14, 19) est réalisé en un matériau composite, en particulier en une matière plastique renforcée par des fibres.

18. Assemblage (17, 21) suivant l'une des revendications 11 à 17, **caractérisé en ce que** les tôles métalliques (1, 2) présentent une épaisseur de matériau comprise entre 0,2 mm et 10 mm.

19. Assemblage (17, 21) suivant l'une des revendications 11 à 18, **caractérisé en ce que** les tôles métalliques (1, 2) sont réalisées en aluminium, en un alliage d'aluminium, en titane, en un alliage de titane, en acier, en un alliage d'acier ou analogues.

20. Assemblage (17, 21) suivant l'une des revendications 11 à 19, **caractérisé en ce que** la au moins une couche de colle (13, 18) est réalisée en une matière plastique thermodurcissable, en particulier en une résine époxy, en une résine polyester, d'une résine BMI ou analogues.

21. Assemblage (17, 21) suivant l'une des revendications 11 à 20, **caractérisé en ce que** les tôles métalliques (1, 2) forment chacune au moins une section partielle d'une coque pour un composant d'un aéronef, en particulier une cellule de fuselage d'un aéronef.

22. Structure en construction légère, en particulier une cellule de fuselage, une voilure, un empennage horizontal ou vertical d'un aéronef ou analogues, formée de plusieurs coques jointoyées entre elles et/ou de sections partielles d'une coque, **caractérisée en ce qu'**au moins deux coques et/ou au moins deux sections partielles d'au moins une coque sont jointoyées entre elles pour former la structure en construction légère à l'aide d'au moins un assemblage suivant l'une des revendications 11 à 21.
